# EUROPEAN PATENT APPLICATION

(11) **EP 1 323 677 A1**
(43) Date of publication of application: **02.07.2003**
(21) Application number: 01955610.9
(22) Date of filing: 09.08.2001
(51) Int. Cl.: C02F 1/42, B01J 41/04, B01J 49/00, C08J 3/00, C08F 6/14

(54) **METHOD OF SEPARATING ANIONIC FLUOROCHEMICAL SURFACTANT**

(30) Priority: 11.08.2000 JP 2000244377
(71) Applicant: Daikin Industries, Ltd., Osaka-shi, Osaka 530-8323 (JP)
(72) Inventor: KONDO, Masahiro, c/o DAIKIN INDUSTRIES LTD., Settsu-shi, Osaka 566-8585 (JP); ICHIDA, Takuya, DAIKIN INDUSTRIES LTD., Settsu-shi, Osaka 566-8585 (JP)
(74) Representative: HOFFMANN - EITLE
(86) International application number: JP0106840
(87) International publication number: WO02014223

(57) **Abstract**

Separation of an anionic fluorochemical surfactant from an aqueous solution containing the anionic fluorochemical surfactant is carried out by i) contacting the aqueous solution with a basic anion-exchange resin so that the anionic fluorochemical surfactant is adsorbed on the resin, and ii) eluting the anionic fluorochemical surfactant adsorbed on the resin with an eluent which is an alkaline solution containing water and an organic solvent.

## Description

### Technical Field

The present invention relates to a method for separating an anionic fluorochemical surfactant (or anionic fluorine-containing surfactant) from an aqueous solution containing the anionic fluorochemical surfactant, and particularly to a method for recovering an anionic fluorochemical surfactant from an aqueous solution containing the anionic fluorochemical surfactant which has been used as an emulsifier in a homopolymerization of a fluoromonomer or copolymerization reaction of fluoromonomers.

### Background Art

An anionic fluorochemical surfactant such as C₇F₁₅COONH₄, H(C₂F₄)₃COONa or H(C₂F₄)₄COONa is used as an emulsifier in a homopolymerization or copolymerization reaction (these reactions are generically referred to as "polymerization reaction) of a fluoromonomer such as tetrafluoroethylene (TFE), vinylidene fluoride (VdF), vinyl fluoride (VF), trifluorochloroethylene (CTFE), hexafluoropropylene (HEP), fluorovinyl ether (FVE) and so on. These fluorochemical surfactants (or fluorine-containing surfactants) are produced by a telomerization of a monomer which is fluorinated or electrolytically fluorinated and the production cost thereof is high. Therefore, the emulsifier is usually recovered after being used in the polymerization reaction.

The anionic fluorochemical surfactant (which is referred to as an "emulsifier" or a "fluorochemical surfactant") which has been used as an emulsifier in an emulsion polymerization of the above fluoromonomers is contained in an aqueous solution resulted from separating the polymer from an aqueous dispersion, a waste of polymer washing water, and a washing water which has been used for washing gas exhausted in a step for drying polymer or a step for thermally treating the polymer. The emulsifier is recovered by contacting the aqueous solution with an ion-exchange resin so that the emulsifier is adsorbed on the resin, and eluting the emulsifier with an appropriate solution followed by separating the emulsifier from the eluate, for example, by extraction. The ratio of the amount of the fluorochemical surfactant which is eluted into the eluent (i.e. eluted amount) to the amount of the fluorochemical surfactant which is adsorbed on the ion-exchange resin (i.e. adsorbed amount) is referred to as "recovery." The eluted amount is generally equal to the amount of the emulsifier which is separated from the eluate by extraction and so on. When recovering the emulsifier, it is desirable that each operation is conducted in such a manner that the recovery is higher.

### Disclosure of Invention

The recovering technique of a fluorochemical surfactant with an ion-exchange resin (thereinafter referred to as "IER") is disclosed, for example, in USP 3,882,153. In USP 3,882,153, there is described a method wherein a fluorochemical surfactant is adsorbed on a weak-basic anion-exchange resin and then eluted with an ammonia aqueous solution. However, this method has the disadvantages of 1) requiring a lot of ammonia aqueous solution at the elution stage, and 2) taking too much time for the elution. Further, in USP 3,882,153, attempts are made to elute the fluorochemical surfactant with an aqueous solution of NaOH or KOH. However, USP 3,882,153 apparently indicates that when an aqueous solution of NaOH or KOH is used, the elution speed is less than a half of that in case of using an ammonia aqueous solution, and therefore, an aqueous solution of NaOH or KOH is less suitable for the eluent than an ammonia aqueous solution in view of the elution speed.

In order to overcome the disadvantages of the above recovering method using an ammonia aqueous solution, Japanese Patent Kokai (Laid-Open) Publication No. 55-104651 discloses a method wherein a fluorinated emulsifier is adsorbed on a basic anion-exchange resin and then eluted with a mixture of a dilute mineral acid and an organic solvent. In this method, an acid material which is opposite to a basic material is used together with an organic solvent. This method makes it possible to decrease the amount of the eluent and shorten the elution time, and therefore overcomes the disadvantages of the above-mentioned method in which an ammonia aqueous solution is used. However, in this method, it is necessary to use the organic solvent at a high concentration such that the ratio of the organic solvent is about 75 to 90 vol % of the total eluent in order to recover the fluorochemical surfactant at a high recovery in. the elution process. In most examples shown in Japanese Patent Kokai (Laid-Open) Publication No. 55-104651, an average recovery of 70 % or more is achieved by using an organic solvent at a high concentration of 83 to 90 vol %. However, in only one example in which an organic solvent is used at a relatively low concentration of 55 vol %, the recovery is so low as 48 %.

According to experiments by the inventors of the present invention, it was found that as the concentration of an organic solvent is lower, the recovery of the fluorochemical surfactant becomes lower, and that when the concentration is 25 vol %, the recovery is only 5 %. Therefore, in this method, the concentration of the organic solvent must be high, for example, about 75 to 95 vol %. When the concentration of the organic solvent is high in the eluent, the concentration of the organic solvent in the eluent remaining on the ion-exchange resin after the elution also becomes high. This gives a disadvantage to reuse of the ion-exchange resin. In the case where the ion-exchange resin is washed with pure water by a conventional method for the purpose of reusing and the concentration of the organic solvent in the remaining eluent is high, more pure water is required which leads to a lot of diluted aqueous solution of the organic solvent. This causes a problem of involving high cost for recovering or discarding the organic solvent from this aqueous solution.

The present invention has been made in consideration of the circumstances described above, and an object thereof is to provide a method for separating an anionic fluorochemical surfactant from an aqueous solution containing the anionic fluorochemical surfactant, which method does not require a lot of eluent and makes it possible to recover the fluorochemical surfactant adsorbed on the IER during a short elution time.

Further, the object of the present invention is to provide a method for separating a fluorochemical surfactant adsorbed on the IER at a high recovery even when the concentration of an organic solvent in an eluent is low.

In order to achieve the objects, the inventors have studied and found that when a fluorochemical surfactant adsorbed on a weak-basic anion-exchange resin is eluted using a mixture containing an alkali, water and an organic solvent as an eluent, the recovery of the anionic fluorochemical surfactant is stably kept high even if the concentration of the organic solvent in the eluent is so low as about 10 to 25 vol %.

Furthermore, the inventors have found that when a combination of an alkali and an organic solvent is used as an eluent, the fluorochemical surfactant is recovered at a higher recovery compared with a known method wherein a mineral acid such as HCI and an organic solvent are used together even if the elution time is short. The present invention is completed based on these new knowledges.

In order to achieve the above objects, according to the present invention, there is provided a method for separating an anionic fluorochemical surfactant from an aqueous solution containing the anionic fluorochemical surfactant which includes the steps of:
i) treating the aqueous solution with a basic anion-exchange resin; and
ii) treating the basic anion-exchange resin used for the treatment of the aqueous solution with an alkaline solution containing water and an organic solvent.

The term "separation" means extracting (or taking out) at least part of one component from a mixture. In the present invention, the object of separation is an anionic fluorochemical surfactant. In this description, the term "separation" means extraction of a fluorochemical surfactant in a broad sense. For example, an operation in which only anionic fluorochemical surfactant is extracted from a certain system, and then used for forming a mixture in another system corresponds to the separation of the anionic fluorochemical surfactant. Therefore, as mentioned below, an operation in which the anionic fluorochemical surfactant is dissolved in the alkaline solution in the above step ii) as well as an operation in which the fluorochemical surfactant is isolated as an acid or base, corresponds to the separation of the anionic fluorochemical surfactant. That is, the separating method of the present invention is a method in which a fluorochemical surfactant is extracted (or removed in some cases) from an aqueous solution and the method does not necessarily involve an isolation of the anionic fluorochemical surfactant.

In the present invention, "treatment" means an operation in which a solution and a basic anion-exchange resin contact each other so as to move at least part of at least one component contained in the solution phase to the basic anion-exchange resin phase, or so as to move at least part of at least one component contained (for example absorbed) in a basic anion-exchange resin phase to the solution phase, and then the solution and the basic anion-exchange resin are fractionated (or divided). As a technique for providing a contact between the solution and the basic anion-exchange resin, there are a technique wherein one of them is moved continuously or semi-continuously in contact with the other which is fixed, a technique wherein both of them are charged together in an appropriate vessel or apparatus and then mixed so as to contact each other, and a technique wherein both of them are moved in concurrently or countercurrently so as to contact each other.

In the present invention, the step i) substantially corresponds to "adsorption." That is, the step i) is a step in which anions of the anionic fluorochemical surfactant are trapped by the anion-exchange resin by contacting the aqueous solution containing the anionic fluorochemical surfactant with the basic anion-exchange resin.

In the present invention, the step ii) substantially corresponds to "elution." That is, the step ii) is a step in which the alkaline solution containing water and the organic solvent is brought into contact with the basic anion-exchange resin which has adsorbed the anionic fluorochemical surfactant thereon, whereby the anionic fluorochemical surfactant is transferred from the basic anion-exchange resin to the alkaline solution.

In the method of the present invention, an alkaline solution containing water and an organic solvent is used as an eluent. "An alkaline solution containing water and an organic solvent" means a homogenous liquid mixture containing water, an alkali and an organic solvent. In one embodiment of the solution, an organic solvent and alkali are dissolved in water, while in another embodiment of the solution, water and alkali are dissolved in an organic solvent. That is, depending on the ratio of the organic solvent in the total solution, water becomes a solvent of the organic solvent, or the organic solvent becomes a solvent of the water, or both of them are contained at a equal volume. However, it is not essential to decide which is the solvent in the solution. Any solution in which an alkali, water and an organic solvent are mixed homogeneously is preferably used as an eluent.

The method of the present invention is preferably applied to recovering of an anionic fluorochemical surfactant which has been used as an emulsifier in the polymerization reaction of a fluoromonomer. Therefore, when the anionic fluorochemical surfactant to be separated has been already used, the separating method of the present invention is provided as a method for recovering the anionic fluorochemical surfactant.

Further, the recovering method of the present invention can be applied to the production method of a fluoropolymer wherein a fluoromonomer is polymerized using an emulsifier. That is, according to the present invention, there is provided a method for producing a fluoropolymer by polymerizing a fluoromonomer using an emulsifier, which includes recovering the emulsifier according to the recovering method of the present invention, from a emulsifier-containing aqueous solution which results from one or more production processes.

Any one of the present inventions is characterized in that an anionic fluorochemical surfactant adsorbed on a basic anion-exchange resin is eluted into an alkaline solution containing water and an organic solvent. Therefore, the present invention essentially provides a method for eluting an anionic fluorochemical surfactant adsorbed on a basic anion-exchange resin, characterized in that an alkaline solution containing water and an organic solvent is brought into contact with the basic anion-exchange resin on which the anionic fluorochemical surfactant has been adsorbed, so as to elute the anionic fluorochemical surfactant.

### Embodiment for Carrying Out the Invention

In the following, embodiments of the present invention are described.

An anionic fluorochemical surfactant which is the object of separation in the present invention is, for example, an emulsifier used in a polymerization reaction of a fluoromonomer. The anionic fluorochemical surfactant which is particularly suitable for being separated by the method of the present invention is a fluorocarboxlic acid, a fluorosulfonic acid, or salt of any one of these acids.

Specifically, the fluorochemical surfactant is at least one compound selected from a fluorocarboxlic acid, a fluorosulfonic acid and salts of these acid which are represented by the following general formula (a):

R^{F}QX (a)

wherein R^{F} is a fluorohydrocarbon group having 4 to 18 carbon atoms which does or does not have an ether group, Q is -COO- or -SO₃-, and X is H, Na, K, Li or NH₄.

In the general formula (a), R^{F} is preferably a group represented by the following general formula (I), (II), (III), or (IV)

R^{f}(CH₂)ₗ- (I)

R^{f}O(CF₂)ₘ- (II)

Y(CF₂CF₂O)ₙCF(CF₃)- (III)

Y[CF(CF₃)CF₂O]ₙCF(CF₃)- (IV)

In the general formulae (I) (II) (III) and (IV), R^{f} is a perfluoroalkyl group having 4 to 18 carbon atoms, ω-hydroperfluoroalkyl group having 4 to 18 carbon atoms or ω-chloroperfluoroalkyl group having 4 to 18 carbon atoms, I is an integer from 0 to 4, m is an integer from 1 to 2, n is an integer from 1 to 5, and Y is H, F or Cl.

In the general formula (I) and (II), R^{f} is preferably a perfluoroalkyl group having 6 to 9 carbon atoms, a ω-hydroperfluoroalkyl group having 6 to 9 carbon atoms or a ω-chloroperfluoroalkyl group having 6 to 9 carbon atoms. In the general formulae (III) and (IV), n is preferably an integer from 2 to 3, and Y is preferably F (fluorine atom). It should be noted that with respect to the anionic fluorochemical surfactant, the term "preferably" is used to mean that the separation method of the present invention is applied to such preferable surfactant more appropriately.

Specifically, the examples of the anionic fluorochemical surfactants which is the object of the separation in the present invention include perfluorooctanoic acid, ω-hydroperfluoroheptanoic acid, ω-hydroperfluorononanoic acid, 2-perfluoropropoxy-perfluoropropionic acid.

Various commercially available anion-exchange resins may be used as a basic anion-exchange resin which is an absorbent for the fluorochemical surfactant. The basic anion-exchange resin is preferably an ion-exchange resin which has an amino group and/or a quaternary ammonium salt as an ion-exchange group. The amino group may be any one of a primary amino group, a secondary amino group, and a tertiary amino group. Here, the primary amino group is an amino group wherein hydrogen atoms bonded to nitrogen atom are not substituted (-NH₂), the secondary amino group is an amino group wherein one of hydrogen atoms bonded to nitrogen atom is substituted (-NHR), and the tertiary amino group is an amino group wherein two of hydrogen atoms bonded to nitrogen atom are substituted (-NR₂ or NRR').

As the IER suitable for use in the prevent invention, for example, DIAION WA-20 (trade name: a weak-basic anion-exchange resin having -CH₂NH(CH₂CH₂NH)₂H as an ion-exchange group), DIAION WA-30 (trade name: a weak-basic anion-exchange resin having -(CH₂)N(CH₃)₂ as an ion-exchange group), and DIAION SA-10A (trade name: a strong-basic anion-exchange resin having -CH₂N(CH₃)₃Cl as an ion-exchange group) which are all made by Mitsubishi Chemical Corporation, are mentioned.

The form of the IER is preferably converted into an anion form, particularly a chloride form, which is suitable to adsorb the fluorochemical surfactant which usually exists in a form of salt. In order to convert the IER into an anion form, for example, HCI may be passed through the IER before using the IER. In the case where the IER is a strong-basic anion-exchange resin in the form of salt, it may be used after being converted into a regenerated form (-OH form) if necessary. The IER can be used repeatedly by regeneration. In the method of the present invention, the IER is regenerated after each elution since the alkaline solution is used for the elution. However, the regeneration with the alkaline solution convert the IER into the regenerated form (-OH form) solution. Therefore, it is necessary to flow HCl through the IER after the elution, if it is required to convert the IER into the chloride form.

The fluorochemical surfactant is preferably adsorbed on the basic anion-exchange resin under acid condition. Therefore, before the adsorption step, hydrochloric acid (HCI), nitric acid (HNO₃), sulfuric acid (H₂SO₄), or phosphoric acid (H₃PO₄) is preferably added to the aqueous solution containing the fluorochemical surfactant. Particularly, hydrochloric acid (HCI) or nitric acid (HNO₃) is preferably added.

The step in which an anionic fluorochemical surfactant is treated with the IER so as to be adsorbed on the IER is carried out by a technique conventionally employed. Specifically, adsorption is carried out by a column method in which an aqueous solution containing the anionic fluorochemical surfactant is passed through a column which is packed with the IER. In general, the aqueous solution which flows through the column preferably contains 0.001 to 10 mass % anionic fluorochemical surfactant. Alternatively, the step wherein the anionic fluorochemical surfactant is adsorbed on the IER may be carried out by a batch method in which an aqueous solution containing the anionic fluorochemical surfactant and IER are charged together in a vessel or an apparatus, mixed, and then fractionated. Alternatively; the step of adsorption of the anionic fluorochemical surfactant on IER may be carried out by a countercurrent ion-exchange method.

Next, the basic anion-exchange resin which has adsorbed the fluorochemical surfactant thereon is treated with an alkaline solution containing water and an organic solvent, whereby an eluate into which the adsorbed fluorochemical surfactant is eluted is obtained. That is, in this treatment step, the alkaline solution containing water and the organic solvent is used as an eluent. The treatment with the eluent is carried out by flowing the elute through a column following the adsorption of the anionic fluorochemical surfactant on the basic anion-exchange resin by the column method. In this case, a liquid flowing out the column corresponds to the eluate. Alternatively, the treatment with the eluent may be carried out by a batch method, or a method in which an eluent and the basic anion-exchange resin which has adsorbed the fluorochemical surfactant thereon are flowed concurrently so as to contact each other.

The alkaline solution as the eluent is a solution obtained by mixing an alkali, water and an organic solvent. The eluent may be prepared by mixing an alkaline aqueous solution and an organic solvent. In the present invention, as the alkali, at least one compound selected from an alkali metal hydroxide such as NaOH and KOH, NH₄OH and so on is employed.

NaOH is particularly preferable as the alkali which constitutes the alkaline solution. The use of NaOH makes it possible to recover the anionic fluorochemical surfactant at a recovery of 95 % or more when the various conditions such as the concentration of the organic solvent and so on are optimized. Further, the use of NaOH makes it possible to separate the anionic fluorochemical surfactant at a high recovery of 70 to 80 %, even when the concentration of the organic solvent is so low as about 10 to 15 vol %.

The organic solvent contained in the eluent forms a solution by being incorporated with the alkali and water. Therefore, the organic solvent can dissolve water, or can be dissolved in water. In the present invention, the organic solvent contained in the eluent preferably dissolves at least 10 vol % of water. Here, the amount of water which is dissolved in the organic solvent is indicated by the amount of water which is dissolved in the organic solvent at 20 °C. "An organic solvent which can dissolve 10 vol % of water" means an organic solvent which can dissolve water so that the volume ratio of water is 10 when the total volume of the solution obtained by dissolving water into the organic solvent is 100. Further, "an organic solvent which can dissolve at least 10 vol % of water" means an organic solvent which can form a solution with water so that the ratio of water is 10 vol % or more in the solution. Therefore, "an organic solvent which can dissolve at least 10 vol % of water" includes an organic solvent which can form a solution in which the ratio (volume) of water is larger than that of the organic solvent. In the present invention, the eluent is more preferably constituted by an organic solvent which can dissolve at least 50 vol % of water.

The organic solvents suitable for constituting the eluent are, for example, a lower alcohol such as methanol and ethanol, a cyclic ether such as tetrahydrofuran and dioxane, a glycol such as ethylene glycol, an ether of glycol such a monoalkylether of ethylene glycol and a dialkylether of ethylene glycol, an amide such as dimethylformamide and dimethyl acetamide, a ketone such as acetone and methyl ethyl ketone, and a nitrile such as acetonitrile. The eluent may be prepared by using one or more organic solvents selected from these solvents.

In the solution, the mixing ratio of the organic solvent is preferably in the range of about 10 to 90 vol %, more preferably about 10 to 80 vol %, and still more preferably about 10 to 70 vol %. Here, the mixing ratio of the organic solvent is indicated by the amount of the organic solvent in the solution at 20 °C. As the mixing ratio of the organic solvent is higher, the fluorochemical surfactant is separated at a higher recovery.

The alkali is contained at a concentration of about 0.1 to 5 N, and particularly preferably about 0.25 to 3 N in the entire solution.

Generally, as the alkali concentration of the alkaline solution is higher, the fluorochemical surfactant is eluted better. However, as the alkali concentration of the alkaline solution is higher, it is more difficult to increase the mixing ratio of the organic solvent, that is, the solubility of the organic solvent becomes lower. Further, the solubility of the organic solvent varies depending on the kinds of organic solvent and alkali. Therefore, in order to perform the separation advantageously, it is preferable to use the alkaline solution of which alkali concentration is as high as possible, as long as the organic solvent can form a solution together with the alkali and water depending on the combination of the organic solvent and the alkali. In the case where the above-mentioned preferable mixing ratio of the organic solvent and the above-mentioned preferable alkali concentration are realized in the alkaline solution, it is desirable that the mixing ratio of the organic solvent is determined so that the alkali concentration is high (that is, the alkali concentration becomes preferentially high).

The preferable mixing ratio of the organic solvent is as described in the above. Generally, when the mixing ratio (i.e. concentration) of the organic solvent is low, the recovery of the fluorochemical surfactant tends to be low. However, it has been found that the fluorochemical surfactant is recovered at a high recovery of about 90 to 95 % which is equivalent to that when using an eluent of which organic solvent concentration is high, when the IER has been used for adsorption of the fluorochemical surfactant, the fluorochemical surfactant has been eluted with an eluent of which organic solvent concentration is low, and thereafter the fluorochemical surfactant is eluted from the IER with the eluent of which organic solvent concentration is low. That is, when using an eluent of which organic solvent concentration is low, it is possible to obtain the same result as that when using an eluent of which organic solvent concentration is high, by employing a basic anion-exchange resin which has been used for adsorption and elution once, twice or more times. This result can be obtained when the basic anion-exchange resin which has been used for adsorption and elution is made into an anion form (for example, a chloride form by passing hydrochloric acid through the resin) after elution before next adsorption. The basic anion-exchange resin which has been used for adsorption and elution may be one which has been used in an elution step carried out with an eluent of which organic solvent concentration is high.

The fluorochemical surfactant adsorbed on the IER is preferably eluted with about 25 to 500 parts by volume of the eluent, and more preferably about 50 to 300 parts by volume of the eluent when 100 parts by volume of the basic anion-exchange resin are charged. The temperature at which the elution is carried out is not critical, and generally in the range of 0 to 50 °C. In this temperature range, as the elution temperature is higher, the elution speed is higher, and therefore it is preferable that the elution temperature is higher.

The eluted fluorochemical surfactant exists in the form of alkali salt in the eluate. Since this eluate contains an excess amount of the alkali and the organic solvent, it is preferable to carry out a treatment in which the fluorochemical surfactant is separated from the solution (i.e. isolation) in order to use the fluorochemical surfactant, for example, in the polymerization reaction of the fluoromonomer. Such treatment is usually carried out according to the following methods. One of the methods includes neutralizing the eluate with a mineral acid such as hydrochloric acid, adding an excess amount of hydrochloric acid and adding an ether so as to extract the fluorochemical surfactant followed by neutralizing with an ammonia aqueous solution and drying the solvent so that the fluorochemical surfactant is recovered as an ammonium salt. Another method includes collecting the organic solvent by distillation and then adding sulfuric acid thereto so as to precipitate the fluorochemical surfactant converted into an acid form, followed by distilling the precipitated substance (liquid) so that the fluorochemical surfactant is recovered as an acid. The method for separating the fluorochemical surfactant from the eluate is not limited to these methods, and the method conventionally employed can be utilized.

As described in the above, according to the separating method of the present invention, it is possible to elute the fluorochemical surfactant adsorbed on an IER with a smaller amount of eluent for a shorter time. Further, it is possible to separate the anionic fluorochemical surfactant stably at a high recovery even if the amount of the organic solvent is small. Therefore, the present invention makes it possible to recover and reuse an expensive anionic fluorochemical surfactant which is used as an emulsifier in a polymerization reaction of a fluoromonomer. In the below, the embodiments in which the present invention is applied to a method for producing fluoropolymer wherein a fluoromonomer is polymerized.

The polymerization reactions of a fluoromonomer to which the separation method of the present invention can be applied are the reactions which are mentioned in "Background Art." In the following, there are described the steps in which a solution containing an emulsifier to be recovered is produced in all production process for obtaining the polymer product by carrying out the polymerization, together with the common polymerization process of a fluoromonomer.

In the polymerization step of a fluoromonomer, the polymer is separated after polymerization by adding water to the reaction system that contains polymer so as to coagulate the polymer. At this stage, the aqueous phase (aqueous solution) which is left after the separation of the polymer contains the emulsifier.

After the coagulation, the separated polymer is washed with water. Since the polymer with the emulsifier attaching thereto to or remaining thereon is washed, the water which has been used for washing contains the emulsifier.

The washed polymer is heated to be dried. At this stage, when the emulsifier still remains on the washed polymer, the emulsifier is entrained by exhaust gas emitted in the drying step. Therefore, by washing the exhaust gas with an aqueous solution of alkali, the alkaline aqueous solution which has been used for washing contains the emulsifier.

The concentration of the emulsifier in each emulsifier-containing aqueous solution which is produced in each step is relatively low, specifically 1 weight % or less. The above each aqueous solution may be subjected to the separation step of emulsifier continuously by passing through an appropriate line. Alternatively, the aqueous solution produced in each step may be stored in one tank, and then provided to be subjected to the step of separating emulsifier. When the concentration of the emulsifier is so low that the emulsifier cannot be separated effectively, the aqueous solution may be condensed by evaporating water in the solution.

As described in the above, the separating method of the present invention is suitable for recovering a used emulsifier from an emulsifier-containing aqueous solution which is produced in each step of a polymerization reaction of a fluoromonomer. The separating method of the present invention can be incorporated in a method for producing fluoropolymer in which an emulsifier is used for polymerizing a fluoromonomer. In that case, the method for producing the fluoropolymer includes a step of recovering an emulsifier from an aqueous solution containing the emulsifier which solution is produced in the above steps in the production process.

The separating method of the present invention may be combined with another separating method such as a reverse osmosis membrane method and/or activated charcoal absorption. For example, when an anionic fluorochemical surfactant is remained in the aqueous solution which has passed through an ion-exchange resin and the aqueous solution is brought into contact with activated carbon, the anionic fluorochemical surfactant is adsorbed by the activated carbon, and thereby the content of the anionic fluorochemical surfactant in the aqueous solution can become lower. Therefore, the combination of the present invention and the adsorption treatment with activated carbon makes it possible, for example, to discard the aqueous solution after the separation treatment exerting less influence on the environment.

As described in the above, the present invention provides, as a first embodiment, a method for separating an anionic fluorochemical surfactant from an aqueous solution containing the anionic fluorochemical surfactant, which includes the steps of:
i) treating the aqueous solution with a basic anion-exchange resin; and
ii) treating the basic anion-exchange resin with which the aqueous solution has been treated, with an alkaline solution including water and an organic solvent.

The present invention provides, as a second embodiment, the method for separating the anionic fluorochemical surfactant according to the first embodiment in which the step i) is a step in which the anionic fluorochemical surfactant is adsorbed on the basic anion-exchange resin by contacting the aqueous solution containing the anionic fluorochemical surfactant with the basic anion-exchange resin, and the step ii) is a step in which the anionic fluorochemical surfactant is eluted by contacting the alkaline solution containing water and the organic solvent with the basic anion-exchange resin which has adsorbed the anionic fluorochemical surfactant thereon.

The present invention provides, as a third embodiment, the method for separating the anionic fluorochemical surfactant according to the first or second embodiment, in which the basic anion-exchange resin which has already used one or more times for carrying out the steps i) and ii), is used in the step i).

The present invention provides, as a fourth embodiment, the method for separating the anionic fluorochemical surfactant according to any one of the first to the third embodiments, in which the basic anion-exchange resin has an amino group and/or a quaternary ammonium salt as an ion-exchange group.

The present invention provides, as a fifth embodiment, the method for separating the anionic fluorochemical surfactant according to any one of the first to the fourth embodiments, in which the alkaline solution contains NaOH.

The present invention provides, as a sixth embodiment, the method for separating the anionic fluorochemical surfactant according to any one of the first to the fifth embodiments in which the organic solvent contained in the alkaline solution can dissolve 10 vol % or more of water.

The present invention provides, as a seventh embodiment, the method for separating the anionic fluorochemical surfactant according to the sixth embodiment, in which the organic solvent contained in the alkaline solution is selected from metanol, ethanol and acetonitrile.

The present invention provides, as an eighth embodiment, the method for separating the anionic fluorochemical surfactant according to any one of the first to the seventh embodiments, in which the organic solvent is contained in the alkaline solution at a ratio in the range of 10 to 80 vol %.

The present invention provides, as a ninth embodiment, the method for separating the anionic fluorochemical surfactant according to any one of the first to the eight embodiments in which the concentration of alkali is in the range of 0.1 to 5 N.

The present invention provides, as a tenth embodiment, the method for separating the anionic fluorochemical surfactant according to any one of the first to the ninth embodiments, in which the anionic fluorochemical surfactant is at least one compound selected from a fluorocarboxlic acid, a fluorosulfonic acid and salts of these acid which are represented by the following general formula (a):

R^{F}QX (a)

wherein R^{F} is a fluorohydrocarbon group having 4 to 18 carbon atoms which does or does not have an ether group, Q is -COO- or -SO₃-, and X is H, Na, K, Li or NH₄.

The present invention provides, as a eleventh embodiment, the method for separating the anionic fluorochemical surfactant according to the tenth embodiment, in which R^{F} in the general formula (a) is represented by the general formula (I), (II), (III), or (IV)

R^{f}(CH₂)ₗ- (I)

R^{f}O(CF₂)ₘ- (II)

Y(CF₂CF₂O)ₙCF(CF₃)- (III)

Y[CF(CF₃)CF₂O]ₙCF(CF₃)- (IV)

wherein R^{f} is a perfluoroalkyl group, ω-hydroperfluoroalkyl group or w-chloroperfluoroalkyl group each having 4 to 18 carbon atoms, I is an integer from 1 to 4, m is an integer from 1 to 2, n is an integer from 1 to 5, and Y is H, F or Cl.

The present invention provides, as a twelfth embodiment, the method for separating the anionic fluorochemical surfactant according to any one of the first to the eleventh embodiments, which further includes the step of separating the anionic fluorochemical surfactant as a salt or acid thereof from the alkaline solution which contains the anionic fluorochemical surfactant after the step ii).

The present invention provides, as a thirteenth embodiment, a method for recovering an anionic fluorochemical surfactant from an aqueous solution containing the anionic fluorochemical surfactant which has been used, wherein the anionic fluorochemical surfactant which has been used is recovered by the method for separating the anionic fluorochemical surfactant according to any one of the first to the twelfth embodiments.

The present invention provides, as a fourteenth embodiment, the method for recovering the anionic fluorochemical surfactant which has been used according to the thirteenth embodiment, in which the anionic fluorochemical surfactant to be recovered is an emulsifier which has been used for a polymerization reaction of a fluoromonomer.

The present invention provides, as a fifteenth embodiment, a method for producing fluoropolymer wherein fluoromonomer is polymerized using the emulsifier (anionic fluorochemical surfactant), which method is characterized in that the emulsifier is recovered by employing the recovering method of the thirteenth embodiment, from the emulsifier-containing aqueous solution which are produced in one or more production steps.

The present invention provides, as a sixteenth embodiment, a method for eluting an anionic fluorochemical surfactant adsorbed on a basic anion-exchange resin, in which an alkaline solution containing water and an organic solvent is brought into contact with the basic anion-exchange resin on which the anionic fluorochemical surfactant has been adsorbed, so as to elute the anionic fluorochemical surfactant.

The present application claims a priority under Paris Convention to Japanese Patent Applications No. 2000-244377 filed on August 11, 2000, .entitled "Method of Separating Anionic Fluorochemical Surfactant." The contents of this application are incorporated herein by the reference thereto in their entirety.

### Industrial Applicability

According to the present invention, an anionic fluorochemical surfactant can be separated at a high recovery from an aqueous solution containing it with a small amount of eluent. Further, the time necessary for the elution is relatively short. Therefore, the present invention is suitable for recovering an emulsifier from the aqueous solution of the emulsifier which is produced in the various steps in the production process of fluoropolymer in which a fluoromonomer is polymerized using the emulsifier.

### Examples

The present invention is described by examples.

### (Test 1: Test Nos. 1-1 to 1-6)

### i) Adsorption

An adsorption tower was made by filling a glass column of 2 mm diameter and 30 cm length with a weak-basic anion-exchange resin, DIAION WA-20 in a quantity of 30 ml together with glass wool. Next, 6 g of ammonium perfluorooctanoate was dissolved in 3 liter of water, and then 2 ml of HCI (37 %) was further added thereto so that an acidic aqueous solution was prepared. This solution was passed through the column at 20 °C so that ammonium perfluorooctanoate was adsorbed on the resin. The adsorbed amount on the ion-exchange resin is determined by quantitatively analyzing the content of ammonium perfluorooctanoate in the aqueous solution which has passed through the column.

### ii) Elution

As an eluent, a 50 ml of solution was prepared by mixing a NaOH aqueous solution and an organic solvent. The concentration of alkali and the kind of organic solvent used in each test is as shown in Table 1.

Elution of ammonium perfluorooctanoate was carried out by passing each of 50 ml eluent through the above column at 20 °C taking 10 minutes, and thereby an eluate was obtained. Next, the eluate was diluted with water into 300 ml, neutralized with HCI (37 %). Further, 110 ml of the same HCI was added to the eluate. Next, extraction was carried out three times using diethyl ether in a quantity of 75 ml in each time. The extracts were put together. The combined extract was washed with water once, and transferred to a 300 ml beaker followed by adding a 28 % ammonium aqueous solution in a quantity of 10 ml. The extract was gradually evaporated to dryness on a water bath so that ammonium perfluorooctanoate was recovered. The adsorbed amount, the eluted amount, and the recovery are shown in Table 1. The recovery is indicated by the ratio of the eluted amount to the adsorbed amount. This is the same in the following tests.

**Table 1**

| No. | Eluent | | Adsorbed Amount (g) | Eluted Amount (g) | Recovery (%) |
|---|---|---|---|---|---|
| | Concentration of Alkali- Kind of Alkali Kind of Organic Solvent | Ratio of Organic Solvent (vol%) | | | |
| 1-1 | 2N-NaOH Ethanol | 74 | 5.7 | 5.5 | 96 |
| 1-2 | 2N-NaOH Methanol | 74 | 5.7 | 5.4 | 95 |
| 1-3 | 2N-NaOH Ethanol | 50 | 5.5 | 4.8 | 87 |
| 1-4 | 2N-NaOH Ethanol | 20 | 5.5 | 4.2 | 76 |
| 1-5 | 2N-NaOH Ethanol | 10 | 5.6 | 3.8 | 68 |
| 1-6 | 0.5N-NaOH Acetonitrile | 24 | 5.5 | 4.5 | 82 |

### (Test 2)

The hydrochloric acid aqueous solution of ammonium perfluorooctanoate which was the same as that used in Test 1 was passed through the IER with which Test No. 1-4 had been done in Test 1, in the same manner as in Test 1, and thereby ammonium perfluorooctanoate was adsorbed on the IER. Next, ammonium perfluorooctanoate was eluted with the eluent which was the same as that used in Test No. 1-4 in Test 1, in the same manner as Test 1. The result is shown in the row of "Second" in Table 2. Further, the adsorption and elution were repeated using this IER column. The results are shown in the rows of "Third" and "Fourth" in Table 2.

**Table 2**

| Times | Adsorbed Amount (g) | Eluted Amount (g) | Recovery (%) |
|---|---|---|---|
| Second | 5.3 | 5.1 | 96 |
| Third | 5.2 | 4.8 | 92 |
| Fourth | 5.3 | 5.2 | 98 |

As shown in Table 1, the recovery in Test 1-4 wherein the eluent with the mixing ratio of organic solvent small. was used is lower than that in other tests. However, as shown in Table 2, in the case where the adsorption and elution of an anionic fluorochemical surfactant are carried out using the IER which has been used for separation (adsorption and elution) once, twice or more times, the anionic fluorochemical surfactant can be separated at a high recovery even if the mixing ratio.of organic solvent in the eluent is low.

### (Test 3)

A solution which is shown in Table 3 was prepared according to the method disclosed in U.S. Patent No. 3,882,153, and ammonium perfluorooctanoate is separated in the same manner as Test 1 (Test 3-B). The result of this test is shown in Table 3 together with the result of the test conducted according to the method of the present invention (Test 3-A). The result of Test 3-A corresponds to the result of Test No. 1-3 in Test 1.

**Table 3**

| | | Test 3-A | Test 3-B |
|---|---|---|---|
| Eluent | Concentration of Alkali -Kind of Alkali | 2N-NaOH | 1N-NH₄OH |
| | Kind of Organic Solvent | Ethanol | - |
| | Mixing Ratio of Organic Solvent | 5 0 vol % | 0 |
| Amount of Eluent | | 50ml | 50ml |
| Time for Elution | | 10min | 10min |
| Recovery | | 87% | 18% |

### (Test 4)

A solution which is shown in Table 4 was prepared according to the method disclosed in Japanese Kokai (Laid-Open) Publication No. 55-104651, and ammonium perfluorooctanoate is separated in the same manner as Test 1 (Test 4-C). The result of this test is shown in Table 4 together with the result of the test conducted according to the method of the present invention (Test 4-A). The Test 4-A is conducted in the same manner as Test 1 except that the solution shown in Table 4 is used as the eluent.

**Table 4**

| | | Test 4-A | Test 4-C |
|---|---|---|---|
| Eluent | Concentration of Alkali -Kind of Alkali | 2N-NaOH | 2N-HCl |
| | Kind of Organic Solvent | Ethanol | Ethanol |
| | Mixing Ratio of Organic Solvent | 26 vol% | 26 vol% |
| Adsorbed Amount | | 5.8g | 5.7g |
| Eluted Amount | | 4.6g | 0.3g |
| Recovery | | 79% | 5% |

From the results of Tests 3 and 4, it has been found that, according to the method of the present invention, ammonium perfluorooctanoate was separated at a higher recovery compared with the conventional methods even when the elution time is so short as 10 minutes.

### (Test 5: Test Nos. 5-1 to 5-4)

Ammonium perfluorooctanoate was separated from an aqueous solution in the same manner as Test 1 except that KOH, NH₄OH and HCI were used instead of NaOH and that the elution temperature was set at 35 °C. The kind of organic solvent used in each test and the results are shown in Table 5.

**Table 5**

| No. | Eluent | | Adsorbed Amount (g) | Eluted Amount (g) | Recovery (%) |
|---|---|---|---|---|---|
| | Concentration of Alkali-Kind of Alkai Kind of Organic Solvent | Ratio of Organic Solvent (vol%) | | | |
| 5-1 | 2N-NaOH Ethanol | 50 | 5.6 | 5.2 | 93 |
| 5-2 | 2N-KOH Ethanol | 50 | 5.6 | 2.1 | 38 |
| 5-3 | 2N-NH₄OH Ethanol | 50 | 5.4 | 3.2 | 59 |
| 5-4 | 2N-HCl Ethanol | 50 | 5.7 | 0.6 | 11 |

From Table 5, it is found that the recovery achieved by using the HCI solution containing water and an organic solvent is lower than that achieved by the alkaline solution. Further, a comparison of the result of Test 1-3 and the result of Test 5-1 indicates that recovery in Test 5-1 is higher than that in Test 1-3 although the eluent is the same. This is because the temperature upon the elution in Test 5 is high, 35 °C.

### (Test 6: Test Nos. 6-1 to 6-3)

A fluorochemical surfactant is separated from an acidic aqueous solution in the same manner as Test 1 except that ammonium w-hydroperfluoroheptanoate is used as the fluorochemical surfactant instead of ammonium perfluorooctanoate. The kinds of eluents and the result of each test are shown in Table 6.

**Table 6**

| No. | Eluent t | | Adsorbed Amount (g) | Eluted Amount (g) | Recovery (%) |
|---|---|---|---|---|---|
| | Concentration of Alkali-Kind of Alkai Kind of Organic Solvent | Ratio of Organic Solvent (vol%) | | | |
| 6-1 | 2N-NaOH Ethanol | 74 | 5.4 | 5.2 | 96 |
| 6-2 | 2N-NaOH Ethanol | 50 | 5.5 | 5.0 | 91 |
| 6-3 | 2N-NaOH Ethanol | 20 | 5.4 | 4.5 | 83 |

### (Test 7: Test Nos. 7-1 to 7-2)

The anionic fluorochemical surfactant is separated from an aqueous solution in the same manner as Test 1 except that DIAION SA-10A is used as the IER instead of DIAION WA-20. The kinds of eluents and the result of each test are shown in Table 7.

**Table 7**

| No. | Eluent | | Adsorbed amount (g) | Eluted amount (g) | Recovery (%) |
|---|---|---|---|---|---|
| | Concentration of Alkali-Kind of Alkai Kind of Organic Solvent | Ratio of Organic Solvent (vol%) | | | |
| 7-1 | 2.5N-NaOH Ethanol | 74 | 5.5 | 4.1 | 75 |
| 7-2 | 2.5N-NaOH Ethanol | 50 | 5.7 | 3.0 | 53 |

### (Test 8: Example of recovering from an actual polymer dispersion liquid)

Emulsion polymerization of tetrafluoroethylene was conducted using ammonium perfluorooctanoate as an emulsifier. Polytetrafluoroethylene was separated by coagulation from the aqueous dispersion of polytetrafluoroethylene after emulsion polymerization, followed by addition of HCl so that 10 liter of acidic solution (containing 0.08 wt % of ammonium perfluorooctanoate) was obtained. To this aqueous solution, a 10%-AlCl₃ aqueous solution in a quantity of 1 ml is added so as to remove the remaining polymer fully. The aqueous solution was passed through the column which was filled with 30 ml of DIAION WA-20 so that ammonium perfluorooctanoate was adsorbed. Next, an eluent was prepared by mixing a NaOH aqueous solution and ethanol. In the eluent, the mixing ratio ethanol was 50 vol % and the concntration of alkali was 2 N. With 50 ml of this eluent, ammonium perfluorooctanoate was eluted and recovered in the same manner as Test 1. In this test, the adsorbed amount of ammonium perfluorooctanoate was 7.2 g, the eluted amount was 6.1 g, and the recovery was 85 %.

### (Test 9)

An anionic fluorochemical surfactant is separated and eluted in the same manner as Test 1 except that 2-perfluoropropoxy-perfluoropropionic acid (CF₃CF₂CF₂OCF(CF₃)COOH) was used as the anionic fluorochemical surfactant instead of ammonium perfluorooctanoate. The eluent used in the elution step is the same as that used in Test 1-4. In this test, the adsorbed amount of the anionic fluorochemical surfactant was 4.8 g, the eluted amount was 3.4 g, and the recovery was 71 %.

## Claims

1. A method for separating an anionic fluorochemical surfactant from an aqueous solution containing the anionic fluorochemical surfactant which comprises the steps of:
i) treating the aqueous solution with a basic anion-exchange resin; and
ii) treating the basic anion-exchange resin used for the treatment of the aqueous solution with an alkaline solution containing water and an organic solvent.

2. The method for separating the anionic fluorochemical surfactant according to claim 1, wherein the step i) is a step in which the anionic fluorochemical surfactant is adsorbed on the basic anion-exchange resin by contacting the aqueous solution containing the anionic fluorochemical surfactant with the basic anion-exchange resin, and the step ii) is a step in which the anionic fluorochemical surfactant is eluted by contacting the alkaline solution containing water and the organic solvent with the basic anion-exchange resin which has adsorbed the anionic fluorochemical surfactant thereon.

3. The method for separating the anionic fluorochemical surfactant according to claim 1, wherein the basic anion-exchange resin which has been used for carrying out the steps i) and ii) once or more times is used.

4. The method for separating the anionic fluorochemical surfactant according to claim 2, wherein the basic anion-exchange resin which has been used for carrying out the steps i) and ii) once or more times is used.

5. The method for separating the anionic fluorochemical surfactant according to claim 1, wherein the basic anion-exchange resin has an amino group and/or a quaternary ammonium salt as an ion-exchange group.

6. The method for separating the anionic fluorochemical surfactant according to claim 2, wherein the basic anion-exchange resin has an amino group and/or a quaternary ammonium salt as an ion-exchange group.

7. The method for separating the anionic fluorochemical surfactant according to claim 1, wherein the alkaline solution includes NaOH.

8. The method for separating the anionic fluorochemical surfactant according to claim 2, wherein the alkaline solution includes NaOH.

9. The method for separating the anionic fluorochemical surfactant according to claim 1, wherein the organic solvent contained in the alkaline solution can dissolve 10 vol % or more of water.

10. The method for separating the anionic fluorochemical surfactant according to claim 2, wherein the organic solvent contained in the alkaline solution can dissolve 10 vol % or more of water.

11. The method for separating the anionic fluorochemical surfactant according to claim 9, wherein the organic solvent contained in the alkaline solution is selected from methanol, ethanol and acetonitrile.

12. The method for separating the anionic fluorochemical surfactant according to claim 10, wherein the organic solvent contained in the alkaline solution is selected from methanol, ethanol and acetonitrile.

13. The method for separating the anionic fluorochemical surfactant according to claim 1, wherein the organic solvent is contained in the alkaline solution at a ratio in the range of 10 to 80 vol %.

14. The method for separating the anionic fluorochemical surfactant according to claim 2, wherein the organic solvent is contained in the alkaline solution at a ratio in the range of 10 to 80 vol %.

15. The method for separating the anionic fluorochemical surfactant according to claim 1, wherein the concentration of alkali is in the range of 0.1 to 5 N.

16. The method for separating the anionic fluorochemical surfactant according to claim 2, wherein the concentration of alkali is in the range of 0.1 to 5 N.

17. The method for separating the anionic fluorochemical surfactant according to claim 1, wherein the anionic fluorochemical surfactant is at least one compound selected from a fluorocarboxlic acid, a fluorosulfonic acid and salts of these acid which are represented by the following general formula (a):
R^{F}QX (a)
wherein R^{F} is a fluorohydrocarbon group having 4 to 18 carbon atoms which does or does not have an ether group, Q is -COO- or -SO₃-, and X is H, Na, K, Li or NH₄.

18. The method for separating the anionic fluorochemical surfactant according to claim 2, wherein the anionic fluorochemical surfactant is at least one compound selected from a fluorocarboxlic acid, a fluorosulfonic acid and salts of these acid which are represented by the following general formula (a):
R^{F}QX (a)
wherein R^{F} is a fluorohydrocarbon group having 4 to 18 carbon atoms which does or does not have an ether group, Q is -COO- or -SO₃-, and X is H, Na, K, Li or NH₄.

19. The method for separating the anionic fluorochemical surfactant according to claim 17, wherein R^{F} in the general formula (a) is represented by the general formula (I), (II), (III), or (IV)
R^{f}(CH₂)ₗ- (I)
R^{f}O(CF₂)ₘ- (II)
Y(CF₂CF₂O)ₙCF(CF₃)- (III)
Y[CF(CF₃)CF₂O]ₙCF(CF₃)- (IV)
wherein Rf is a perfluoroalkyl group, ω-hydroperfluoroalkyl group or w-chloroperfluoroalkyl group each having 4 to 18 carbon atoms, I is an integer from 1 to 4, m is an integer from 1 to 2, n is an integer from 1 to 5, and Y is H, F or Cl.

20. The method for separating the anionic fluorochemical surfactant according to claim 18, wherein R^{F} in the general formula (a) is represented by the general formula (I), (II), (III), or (IV)
R^{f}(CH₂)ₗ- (I)
R^{f}O(CF₂)ₘ- (II)
Y(CF₂CF₂O)ₙCF(CF₃)- (III)
Y(CF(CF₃)CF₂O]ₙCF(CF₃)- (IV)
wherein R^{f} is a perfluoroalkyl group, ω-hydroperfluoroalkyl group or ω-chloroperfluoroalkyl group each having 4 to 18 carbon atoms, I is an integer from 1 to 4, m is an integer from 1 to 2, n is an integer from 1 to 5, and Y is H, F or Cl.

21. The method for separating the anionic fluorochemical surfactant according to claim 1, which further comprises the step of separating the anionic fluorochemical surfactant as a salt or acid thereof from the alkaline solution which contains the anionic fluorochemical surfactant after the step ii).

22. The method for separating the anionic fluorochemical surfactant according to claim 2, which further comprises the step of separating the anionic fluorochemical surfactant as a salt or acid thereof from the alkaline solution which contains the anionic fluorochemical surfactant after the step ii).

23. A method for recovering an anionic fluorochemical surfactant from an aqueous solution containing the anionic fluorochemical surfactant which has been used which comprises the steps of:
i) treating the aqueous solution with a basic anion-exchange resin; and
ii) treating the basic anion-exchange resin used for the treatment of the aqueous solution with an alkaline solution containing water and an organic solvent.

24. The method for separating the anionic fluorochemical surfactant which has been used according to claim 23, wherein the step i) is a step in which the anionic fluorochemical surfactant is adsorbed on the basic anion-exchange resin by contacting the aqueous solution containing the anionic fluorochemical surfactant with the basic anion-exchange resin, and the step ii) is a step in which the anionic fluorochemical surfactant is eluted by contacting the alkaline solution containing water and the organic solvent with the basic anion-exchange resin which has adsorbed the anionic fluorochemical surfactant thereon.

25. The method for separating the anionic fluorochemical surfactant which has been used according to claim 23, wherein the anionic fluorochemical surfactant is an emulsifier used in a polymerization reaction of a fluoromonomer.

26. The method for separating the anionic fluorochemical surfactant which has been used according to claim 24, wherein the anionic fluorochemical surfactant is an emulsifier used in a polymerization reaction of a fluoromonomer.

27. A method for producing a fluoropolymer by polymerizing a fluoromonomer using an emulsifier, which method comprises recovering the emulsifier by a method which comprises the steps of:
i) treating an aqueous solution containing the emulsifier which is produced in one or more production steps with a basic anion-exchange resin; and
ii) treating the basic anion-exchange resin used for the treatment of the aqueous solution with an alkaline solution containing water and an organic solvent.

28. The method for producing the fluoropolymer according to claim 27, wherein the step i) is a step in which the emulsifier is adsorbed on the basic anion-exchange resin by contacting the aqueous solution containing the emulsifier with the basic anion-exchange resin, and the step ii) is a step in which the emulsifier is eluted by contacting the alkaline solution containing water and the organic solvent with the basic anion-exchange resin which has adsorbed the emulsifier thereon.

29. A method for eluting an anionic fluorochemical surfactant adsorbed on a basic anion-exchange wherein the anionic fluorochemical surfactant is eluted by contacting an alkaline solution containing water and an organic solvent with the basic anion-exchange resin onto which the anionic fluorochemical surfactant has been adsorbed.
